# EUROPÄISCHE PATENTSCHRIFT

(11) **EP 2 193 592 B1**
(45) Veröffentlichungstag und Bekanntmachung des Hinweises auf die Patenterteilung: **18.09.2019**
(21) Anmeldenummer: 08760956.6
(22) Anmeldetag: 12.06.2008
(51) Int. Cl.: H02K 1/30

(54) **ROTORTRÄGER EINER ELEKTRISCHEN MASCHINE**
ROTOR SUPPORT OF AN ELECTRIC MACHINE
SUPPORT DE ROTOR D'UNE MACHINE ÉLECTRIQUE

(30) Priorität: 30.06.2007 DE 102007032130
(43) Veröffentlichungstag der Anmeldung: 09.06.2010
(73) Patentinhaber: Robert Bosch GmbH, 70442 Stuttgart (DE)
(72) Erfinder: HOFMEISTER, Anja, 71272 Renningen (DE); BEKAVAC, Miro, 70825 Korntal-Muenchingen (DE); MINNERMANN, Markus, 30559 Hannover (DE)
(86) Internationale Anmeldenummer: PCT/EP2008/057419
(87) Internationale Veröffentlichungsnummer: WO 2009/003820

(56) Entgegenhaltungen:
- DE-A1-102004 026 453
- JP-U- 1 101 142
- JP-U- 1 171 553
- JP-U- 3 127 478
- US-B1- 6 408 502

## Beschreibung

Die Erfindung betrifft einen Rotorträger einer elektrischen Maschine mit einer zylinderförmigen Tragfläche und einer radialen Stützwandung.

### Stand der Technik

Bei Rotorträgern großformatiger, elektrischer Maschinen mit hohem Durchmesser/Längenverhältnis, wie sie häufig in Elektroantriebs- und Hybridantriebsfahrzeugen Verwendung finden, ist der Rotorträger selten als klassische Welle, sondern meist hohlwellenartig mit Flanschanbindung ausgeführt. Der Rotorträgerinnenraum, der sich bei einer solchen Ausbildung ergibt, wird als zusätzlicher Bauraum für die elektrische Maschine und/oder für Nebenaggregate oder Ähnliches verwendet, um den in Fahrzeugen begrenzten Bauraum möglicht effektiv nutzen zu können. Zur Herstellung derartiger Rotorträger werden, bedingt durch die Größenverhältnisse, meist spanlose Herstellverfahren wie zum Beispiel eine Umformtechnik (Ziehen, Drücken, Schmieden, oder Guss- oder Sintertechniken) eingesetzt. Aufgrund des bei Fahrzeuganwendungen nur begrenzt verfügbaren Bauraums werden an die Formgestaltung des Rotorträgers erhöhte Anforderungen gestellt, um einen möglichst sinnvoll nutzbaren Rotorinnenraum zu erhalten. Die bekannten Rotorträger in Topfform weisen den Nachteil auf, dass sie fertigungsbedingt Umformradien aufweisen, die beispielsweise zwischen zylinderförmiger Tragfläche und radialer Stützwandung (dem Topfboden) bestehen. Diese Umformradien begrenzen den nutzbaren axialen Bauraum sowohl an der Rotorträger-Außenseite auf der Tragfläche als auch innerhalb des Rotorinnenraums.

DE 10 2004 026 453 A1, offenbart einen Rotorträger einer elektrischen Maschine gemäß dem Oberbegriff des Anspruchs 1. JP 1 171 553, JP 1 101 142 und US 6 408 502 B1 offenbaren jeweils einen Rotorträger einer elektrischen Maschine mit einer zylinderförmigen Tragfläche und einer radialen Stützwandung, wobei der Rotorträger aus mindestens zwei Einzelteilen derart zusammengesetzt ist, dass die zylinderförmige Tragfläche an ihren beiden Endseiten verrundungsfrei ausgestaltet ist.

### Offenbarung der Erfindung

Aufgabe der Erfindung ist es, Rotorträger für elektrische Maschinen der gattungsgemäßen Art bereitzustellen, die die genannten Nachteile meiden.

Die Erfindung betrifft einen Rotorträger einer elektrischen Maschine gemäß Anspruch 1. Hierzu wird ein Rotorträger einer elektrischen Maschine mit einer zylinderförmigen Tragfläche und einer radialen Stützwandung vorgeschlagen, bei dem der Rotorträger aus mindestens zwei Einzelteilen derart zusammengesetzt ist, dass die zylinderförmige Tragfläche an ihren beiden Endseiten im Wesentlichen verrundungsfrei ausgestaltet ist. Durch das Vermeiden der genannten Verrundung an den Endseiten ist die Axialerstreckung des Rotorträgers insgesamt besser nutzbar. Insbesondere außenseitig des Rotorträgers, also auf der Tragfläche, kann die im Wesentlichen gesamte Axiallänge verwendet werden, da sich aufzubringende Elemente, wie beispielsweise Lamellenpakete und/oder Wicklungen, über die gesamte Axiallänge abstützen können. Ähnliches gilt für den Rotorinnenraum, der durch das Fehlen der entsprechenden Innenverrundung zwischen Tragfläche und radialer Stützwandung in größerer Länge nutzbar ist.

In einer Ausführungsform ist das erste Einzelteil ein Zylinderrohr und das zweite Einzelteil ein Stützwandungstopf, das im Inneren des Zylinderrohrs angeordnet ist. Als Stützwandungstopf kann hierbei ein aus dem Stand der Technik geläufiges Formteil wie beispielsweise ein gezogener Topf Verwendung finden, wobei als Zylinderrohr ein in seiner gesamten Axialerstreckung einen gleichbleibenden Durchmesser aufweisendes Zylinderrohr Verwendung findet. Hierbei lässt sich eine Tragfläche ausbilden, die über ihre gesamte Axialerstreckung als Tragfläche und Abstützung für hierauf angeordnete Bauteile wie beispielsweise Lamellenpakete und Wicklungen dienen kann. Ein Stützflächenverlust in einem Bereich der Axialerstreckung der Tragfläche durch die genannten Verrundungsradien findet insoweit nicht statt, als das Zylinderrohr den an dem Stützwandungstopf möglicherweise vorhandenen Verrundungsradius überragt. Erfindungsgemäß ist der Stützwandungstopf derart im Inneren des Zylinderrohrs angeordnet, dass der Topfboden des Stützwandungstopfes (als radialer Stützwandung) nicht mit einer Endseite des Zylinderrohrs abschließt oder diese überragt, sondern an einer für die jeweiligen Einsatzzwecke des Rotorträgers geeignet erscheinenden Stelle im Verlaufe der Längserstreckung des Rotorträgers angeordnet ist, also beispielsweise mittig, oder in einem bestimmten Verhältnis zwischen einer Vorderseite und einer Endseite des Zylinderrohrs angeordnet. Insbesondere in Hinblick auf in dem Rotorinnenraum einzubringende weitere Bauteile oder Komponenten und Gegebenheiten des Flanschanschlusses kann eine solche Anordnung sehr vorteilhaft sein, da die elektrische Maschine durch diese Ausgestaltung des Rotorträgers Bereiche übergreifen kann, die bei aus dem Stand der Technik bekannten Ausführungsformen lediglich benachbart angeordnet werden können.

In einer nicht erfindungsgemäßen Ausführungsform ist das erste Einzelteil ein Zylinderrohr und das zweite Einzelteil eine Endplatte mit kreisförmigem Durchmesser, wobei der Durchmesser dem Zylinderdurchmesser des ersten Einzelteils entspricht. Die Endplatte weist folglich denselben Durchmesser wie das Zylinderrohr an seiner Tragfläche auf, die Endplatte wird zur Herstellung des Rotorträger mit dem Zylinderrohr endseitig derart verbunden, dass Stirnwandungen der Endplatte die Tragfläche verlängern, dergestalt, dass die Außenwandungsfläche des Zylinderrohrs von der Stirnseite der Endplatte durchmessergleich fortgesetzt wird.

In einer anderen nicht erfindungsgemäßen Ausführungsform ist das erste Einzelteil ein erster Zylindertopf und das zweite Einzelteil ein zweiter Zylindertopf, wobei die beiden Zylindertöpfe mit deren Topfböden aneinander grenzend gehalten sind. Es ergibt sich hierbei eine Stützwandungsausbildung durch die beiden aneinander grenzenden Topfböden, wobei sich die Tragfläche als die Summe der Tragflächen der beiden Zylindertöpfe ergibt. Die Topfböden können miteinander verschweißt, verschraubt oder in einer sonstigen geeigneten Art und Weise kraftschlüssig und/oder formschlüssig verbunden werden.

In einer nicht erfindungsgemäßen Ausführungsform sind der erste Zylindertopf und der zweite Zylindertopf Gleichteile. Bei Verwendung von Gleichteilen lässt sich eine besonders ressourcenschonende Herstellung erreichen, da lediglich eine Bauform eines Einzelteils anstelle von mehreren, nämlich mindestens zwei Einzelteilen, hergestellt und bevorratet werden muss. Insbesondere bei Servicefällen ist die Verwendung von Gleichteilen vorteilhaft, da keine Vorhaltung und Logistik für unterschiedliche Teile betrieben werden muss.

In einer weiteren Ausführungsform ist das erste Einzelteil ein Zylinderrohr und das zweite Einzelteil ein Zylindertopf, und als drittes Einzelteil ist ein weiterer Zylindertopf vorgesehen, wobei die beiden Zylindertöpfe mit ihren Topfböden aneinander grenzen und innerhalb des Zylinderrohrs angeordnet sind. In dieser Ausführungsform wird die radiale Stützwandung von den Topfböden des zweiten Einzelteils, nämlich des Zylindertopfes, und des dritten Einzelteils, nämlich des weiteren Zylindertopfes, ausgebildet, ohne den Nachteil in Kauf nehmen zu müssen, dass die beiden Zylindertöpfe in dem Bereich, in dem ihre Topfböden außenseitig aneinandergrenzen, jeweils Verrundungsradien aufweisen, die zu einem über den Bereich der beiden Verrundungsradien verlaufenden Verlust der durchmessergleichen Tragfläche führen. Dieser Bereich wird nämlich von dem Zylinderrohr, das die Zylindertöpfe übergreift, insgesamt übergriffen, so dass als Tragfläche des Rotorträgers lediglich die Außenmantelfläche des Zylinderrohrs maßgeblich ist, die aufgrund ihrer Ausbildung als Zylinderrohr in voller Längserstreckung genutzt werden kann.

In einer bevorzugten Ausführungsform ist das Zylinderrohr ein Kreiszylinderrohr.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand von Ausführungsbeispielen und Figuren näher erläutert.

### Es zeigen

Figur leinen Rotorträger, umfassend ein Zylinderrohr und einen Stützwandungstopf,
Figur 2 einen nicht erfindungsgemäßen Rotorträger, umfassend ein Zylinderrohr und eine Endplatte,
Figur 3 einen nicht erfindungsgemäßen Rotorträger, umfassend zwei topfbodenseitig aneinander grenzend gehaltene Zylindertöpfe und
Figur 4 einen Rotorträger, umfassend ein Zylinderrohr und zwei innerhalb dessen angeordnete Stützwandungstöpfe.

### Ausführungsform(en) der Erfindung

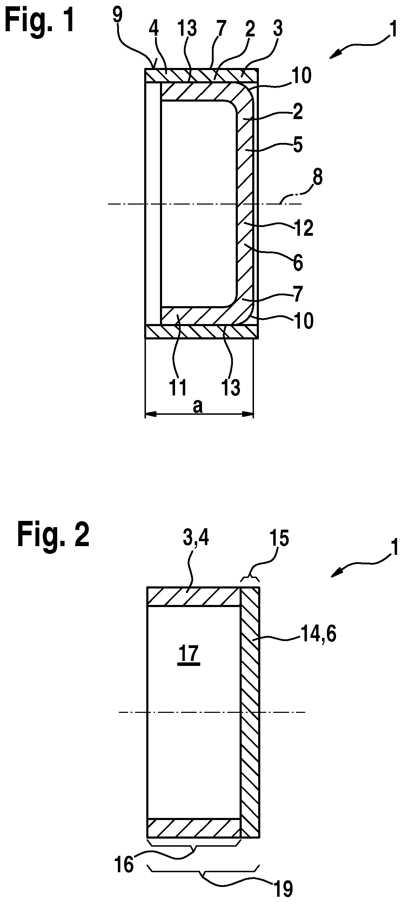

Figur 1 zeigt einen Rotorträger 1 einer nicht dargestellten elektrischen Maschine. Der Rotorträger 1 besteht aus zwei Einzelteilen 2, nämlich einem als Zylinderrohr 3 ausgebildeten, ersten Einzelteil 4, und einem als Stützwandungstopf 5 ausgebildeten, zweiten Einzelteil 6. Das Zylinderrohr 3 und der Stützwandungstopf 5 sind hierbei als Rotationskörper 7 ausgebildet, die zu einer Drehachse 8 des Rotorträgers 1 rotationssymmetrisch sind. Insbesondere weist das Zylinderrohr 3 einen kreiszylindrischen Querschnitt auf. Das erste Einzelteil 4, nämlich das Zylinderrohr 3, weist außenumfangsseitig eine zylinderförmige Tragfläche 9 auf, die beispielsweise der Aufbringung eines hier nicht dargestellten Lamellenpaketes mit elektrischen Wicklungen und/oder Dauermagneten der nicht dargestellten elektrischen Maschine dient. Die Tragfläche 9 ist hierbei in ihrer gesamten Axialerstreckung a zum Aufbringen von zu tragenden Komponenten nutzbar. Sie weist keine Verrundungen 10 auf, wie sie bei im Regelfall umformender Herstellung des zweiten Einzelteils 6, nämlich des Stützwandungstopfes 5, zwischen dessen Seitenwandungen 11 und dessen die Seitenwandungen 11 tragenden, im Wesentlichen rechtwinklig zur Seitenwandung 11 angeordneten Stützwandung 12 im Übergangsbereich von der Stützwandung 12 auf die Seitenwandung 11 entstehen. Diese Verrundungen werden von der Tragfläche 9 des Zylinderrohrs 3 nämlich überragt, da das Zylinderrohr 3 den Stützwandungstopf 5 vollständig übergreift. Die Geometrie des Stützwandungstopfes 5 ist insoweit für das Aufbringen von (hier nicht dargestellten) Komponenten auf die Tragfläche 9 nicht maßgeblich. Zwischen Seitenwandung 11 des Stützwandungstopfes 5 und Zylinderrohr 3 besteht im Bereich einer Berührebene 13 eine kraftschlüssige Verbindung. Alternativ oder zusätzlich besteht zur Übertragung hoher Momente zwischen der Seitenwandung 11 und dem Zylinderrohr 3 eine formschlüssige Verbindung. Der Stützwandungstopf 5 weist, bevorzugt an der Stützwandung 11, einen hier nicht dargestellten Flanschanschluss zur Verbindung des Rotorträgers 1 mit einer hier nicht dargestellten Welle und/oder einem Getriebe auf.

Figur 2 zeigt eine nicht erfindungsgemäße Ausführungsform des Rotorträgers 1, der aus dem Zylinderrohr 3 und aus einer dem Zylinderrohr 3 außendurchmessergleichen Endplatte 14 besteht, wobei das Zylinderrohr 3 das erste Einzelteil 4 und die Endplatte 14 das zweite Einzelteil 6 des Rotorträgers 1 bilden. Die Endplatte 14 weist Stirnwandungen 15 auf, die zusammen mit einer Mantelfläche 16 des Zylinderrohrs 3 die insgesamt nutzbare Tragfläche 9 ausbilden. Die Tragfläche 9 ist folglich in einer solchen Axialerstreckung nutzbar, die sich als die Summe der Axialerstreckung der Mantelfläche 16 des Zylinderrohrs 3 und der Axialerstreckung der Stirnwandung 15 der Endplatte 14 ergibt. Die Endplatte 14 ist an dem Zylinderrohr 3 in einer solchen Art und Weise festgelegt, beispielsweise verschweißt, dass zwischen der Endplatte 14 und dem Zylinderrohr 3 eine Momentübertragung stattfinden kann. Die Endplatte 14 ist bevorzugt mit einem hier nicht dargestellten Flanschanschluss zum Anschluss des Rotorträgers 1 an weitere Komponenten, wie beispielsweise eine nicht dargestellte Welle oder ein nicht dargestelltes Getriebe zur Ausbildung der nicht dargestellten elektrischen Maschine versehen. Bei der hier dargestellten Ausführungsform ergibt sich ein Rotorinnenraum 17, der aufgrund seiner praktisch vollständig rechtwinkligen Anbindung an die Endplatte 14 besonders geeignet für eine darin erfolgende Anbringung weiterer Komponenten geeignet ist, da er praktisch in voller Axialerstreckung des Zylinderrohrs 3 für Einbauten nutzbar ist.
In einer nicht gezeigten weiteren nicht erfindungsgemäßen Ausführungsform des Rotorträgers 1, die im Wesentlichen der in Figur 2 gezeigten Ausführungsform entspricht, besteht der Rotorträger 1 aus einem ersten Zylinderrohr, das dem in Figur 2 gezeigten Zylinderrohr 3 entspricht und einer der Endplatte 14 aus Figur 2 entsprechenden, dem ersten Zylinderrohr außendurchmessergleichen Zwischenplatte, wobei auf einer dem ersten Zylinderrohr abgewandten Seite der Zwischenplatte ein dem ersten Zylinderrohr außendurchmessergleiches zweites Zylinderrohr angeordnet ist. Die beiden Zylinderrohre sind insbesondere als einander entsprechende Gleichteile ausgebildet. Die Zwischenplatte weist - entsprechend der Endplatte 14 der Figur 2 - Stirnwandungen auf, die zusammen mit den Mantelflächen der Zylinderrohre die insgesamt nutzbare Tragfläche 9 ausbilden. Die Befestigung der Zylinderrohre an der Zwischenplatte entspricht der Befestigung des Zylinderrohrs 3 an der Endplatte 14 der in Figur 2 gezeigten Ausführungsform und ist derart, dass zwischen den Zylinderrohren beziehungsweise den Zylinderrohren und der Zwischenplatte eine Momentübertragung stattfinden kann.

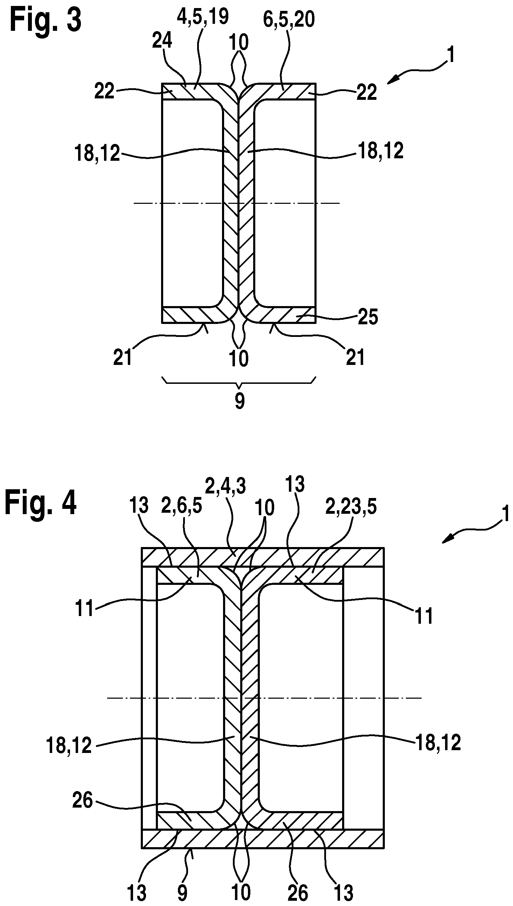

Figur 3 zeigt eine nicht erfindungsgemäße Ausführungsform des Rotorträgers 1. Der Rotorträger 1 wird hierbei aus einem ersten Einzelteil 4 und einem zweiten Einzelteil 6 gebildet, wobei diese jeweils als Zylindertöpfe 26 ausgebildete Stützwandungstöpfe 5 sind, die mit ihren Topfböden 18, die als Stützwandung 12 wirken, aneinander gehalten sind. Das erste Einzelteil 4 ist folglich ein als erster Zylindertopf 24 ausgebildeter erster Stützwandungstopf 19 und das zweite Einzelteil 6 ist ein als zweiter Zylindertopf 2 ausgebildeter zweiter Stützwandungstopf 20 ausgebildet. Beide Stützwandungstöpfe 5 weisen jeweils einen Topfboden 18 auf, der mit dem jeweils anderen Topfboden 18 des jeweils anderen Stützwandungstopfes 5 kraftschlüssig verbunden ist. Die Tragfläche 9 wird hierbei in Längserstreckung als die Summe der jeweiligen Längserstreckung einer Topfaußenfläche 21 der Stützwandungstöpfe 5 gebildet, wobei im Bereich des Übergangs von Topf außenfläche 21 auf Topfboden 18 mögliche (hier übertrieben dargestellte) Verrundungen 10 keine tragende Funktion haben. In einer bevorzugten Ausführung sind die Stützwandungstöpfe 5 als Gleichteile 22 ausgebildet, sie weisen folglich dieselbe Geometrie auf. Auf diese Weise lässt sich eine sehr einfache Lagerhaltung und Logistik in der Herstellung erreichen, so dass bei geeigneter Anordnung von hier nicht dargestellten, von der Tragfläche 9 zu tragenden Komponenten der geringe Nachteil eines im Wesentlichen in Axialerstreckung mittig auftretenden, geringfügigen Verlustes an Tragfläche 9 durch die Verrundungen 10 zumindest kostenmäßig weit ausgeglichen werden kann.

Figur 4 zeigt eine weitere Ausführungsform des Rotorträgers 1, die aus drei Einzelteilen 2 gebildet wird, nämlich aus einem ersten Einzelteil 4, das als Zylinderrohr 3 ausgebildet ist, sowie aus einem zweiten Einzelteil 6 und einem dritten Einzelteil 23, wobei das zweite Einzelteil 6 und das dritte Einzelteil 23 jeweils als Stützwandungstopf 5 ausgebildet sind. Die Stützwandungstöpfe 5 sind Zylindertöpfe 26, die innenseitig des Zylinderrohrs 3 angeordnet sind, in einer solchen Art und Weise, dass sie, wie vorstehend zu Figur 3 beschrieben, mit ihren Topfböden 18 aneinander grenzen. Die Topfböden 18 dienen hierbei als Stützwandung 12, so dass das Zylinderrohr 3 über die Stützwandung 12 über einen hier nicht dargestellten Flanschanschluss beispielsweise an eine Welle, ein Getriebe oder einen anderen Bestandteil angeflanscht werden kann. Die vorstehend zu Figur 3 beschriebenen Verrundungen 10 liegen hierbei innerhalb des Zylinderrohrs 3, wobei die Tragfläche 9 in voller Axialerstreckung von dem Zylinderrohr 3 ausgebildet wird. Die Verrundungen 20 fallen insoweit als Verlust an Tragfläche 9 nicht ins Gewicht, da sie innerhalb des Zylinderrohrs 3 liegen und für auf der Tragfläche 9 anzubringende, nicht dargestellte Komponenten unerheblich sind. Diese können sich in voller Axialerstreckung des Zylinderrohrs 3 auf diesem abstützen. Es ist bei der vorliegenden Ausführungsform nicht zwingend erforderlich, dass die Topfböden 18 der beiden Stützwandungstöpfe 5 miteinander kraftschlüssig verbunden, beispielsweise verschweißt oder vernietet, sind. Zur Momentübertragung zwischen mindestens einem Stützwandungstopf 5 und dem Zylinderrohr 3 genügt die kraftschlüssige Verbindung der Seitenwandung 11 mindestens eines Stützwandungstopfes 5 mit dem Zylinderrohr 3, wobei bevorzugt selbstverständlich beide Zylindertöpfe 5 kraftschlüssig mit dem Zylinderrohr 3 über ihre Seitenwandung 11 in der Berührebene 13 verbunden sind, wie bereits in Figur 1 dargestellt und beschrieben. Der Flanschanschluss kann hierbei über beide Topfböden 18 oder über nur einen Topfboden 18 nur eines Stützwandungstopfes 5 erfolgen.

## Patentansprüche

1. Rotorträger einer elektrischen Maschine mit einer zylinderförmigen Tragfläche (9) und einer radialen Stützwandung, wobei der Rotorträger (1) aus mindestens zwei Einzelteilen (2) zusammengesetzt ist,
**dadurch gekennzeichnet, dass** das erste Einzelteil (4) ein Zylinderrohr (3) und das zweite Einzelteil (6) ein Stützwandungstopf (5,26) ist, der im Inneren des Zylinderrohrs (3) angeordnet ist und aus einer Seitenwandung (11) und einer Stützwandung (12) besteht, wobei der Übergangsbereich von der Stützwandung (12) auf die Seitenwandung 11) verrundet ist und wobei zur Momentenübertragung zwischen der Seitenwandung (11) des Stützwandungstopfes (5,26) und dem Zylinderrohr (3) im Bereich Ihrer Berührebene eine Verbindung besteht und dass das Zylinderrohr (3) in seiner gesamten Axialerstreckung einen gleichbleibenden Außendurchmesser aufweist und den zumindest einen Stützwandungstopf (5,26) vollständig übergreift.

2. Rotorträger nach Anspruch 1, **dadurch gekennzeichnet, dass** ein drittes Einzelteil (23) vorgesehen ist, das ein Zylindertopf (26) ist, wobei der Zylindertopf (26) und der Stützwandungstopf (5) mit ihren Topfböden (18) aneinander grenzen und innerhalb des Zylinderrohrs (3) angeordnet sind.

3. Rotorträger nach einem der vorhergehenden Ansprüche, **dadurch gekennzeichnet, dass** das Zylinderrohr (3) ein Kreiszylinderrohr ist.

## Claims

1. Rotor support of an electrical machine, comprising a cylindrical supporting face (9) and a radial support wall, wherein the rotor support (1) is composed of at least two individual parts (2), **characterized in that** the first individual part (4) is a cylindrical tube (3) and the second individual part (6) is a support wall pot (5, 26) which is arranged in the interior of the cylindrical tube (3) and consists of a side wall (11) and a support wall (12), wherein the transition region from the support wall (12) to the side wall (11) is rounded and wherein, for torque transmission, there is a connection between the side wall (11) of the support wall pot (5, 26) and the cylindrical tube (3) in the region of their contact plane, and **in that** the cylindrical tube (3) has a constant outside diameter over its entire axial extent and fully engages over the at least one support wall pot (5, 26).

2. Rotor support according to Claim 1, **characterized in that** a third individual part (23) is provided, which is a cylinder pot (26), wherein the cylinder pot (26) and the support wall pot (5) border one another by way of their pot bases (18) and are arranged within the cylindrical tube (3).

3. Rotor support according to either of the preceding claims, **characterized in that** the cylindrical tube (3) is a circular-cylindrical tube.

## Revendications

1. Porte-rotor d'une machine électrique, comprenant une surface porteuse (9) de forme cylindrique et une paroi d'appui radiale, le porte-rotor (1) étant assemblé à partir d'au moins deux parties individuelles (2), **caractérisé en ce que** la première partie individuelle (4) est un tube cylindrique (3) et la deuxième partie individuelle (6) un pot de paroi d'appui (5, 26) qui est disposé à l'intérieur du tube cylindrique (3) et se compose d'une paroi latérale (11) et d'une paroi d'appui (12), la zone de transition de la paroi d'appui (12) à la paroi latérale (11) étant arrondie et une liaison étant établie pour la transmission du couple entre la paroi latérale (11) du pot de paroi d'appui (5, 26) et le tube cylindrique (3) dans la zone de leur plan de contact, et **en ce que** le tube cylindrique (3) présente, dans la totalité de sa projection axiale, un diamètre extérieur constant et recouvre entièrement l'au moins un pot de paroi d'appui (5, 26).

2. Porte-rotor selon la revendication 1, **caractérisé en ce qu'**une troisième partie individuelle (23) est présente, laquelle est un pot cylindrique (26), le pot cylindrique (26) et le pot de paroi d'appui (5) étant juxtaposés l'un à l'autre par leurs fonds de pot (18) et étant disposés à l'intérieur du tube cylindrique (3) .

3. Porte-rotor selon l'une des revendications précédentes, **caractérisé en ce que** le tube cylindrique (3) est un tube cylindrique circulaire.
